# EUROPEAN PATENT APPLICATION

(11) **EP 1 862 680 A2**
(43) Date of publication of application: **05.12.2007**
(21) Application number: 07109026.0
(22) Date of filing: 28.05.2007
(51) Int. Cl.: F16C 11/06

(54) **Ball joint with self-adapting plastic shell and method for calibrating such a ball joint**

(30) Priority: 29.05.2006 IT TO20060392
(71) Applicant: OCAP S.p.A., 10087 Valperga (Torino) (IT)
(72) Inventor: Amidei, Dario, I-10010, BANCHETTE (Torino) (IT)
(74) Representative: Rondano, Davide

(57) **Abstract**

The ball joint (10) comprises a pin (12) having a ball head (14) at an end thereof, a socket (16) having a cavity, and a thermoplastic shell (20) received in the cavity of the socket (16) and having a spherical inner surface (22) in which the ball head (14) engages. The shell (20) has a plurality of through apertures, made as circular holes or as slits, distributed all over its surface. The method for calibrating the ball joint (10) consists in producing a relative swinging movement between the ball head (14) and the socket (16), in given temperature conditions and for a given time, during which movement the ball joint (10) assumes all the possible operating configurations. In this way, a self-adaptation effect of the ball joint (10) is achieved due to the creep produced in the shell (20).

## Description

The present invention relates to a ball joint with a plastic shell for use on any type of vehicle, whether a lightweight vehicle, such as a motorcar, or a heavy-duty vehicle, such as a tractor or a truck. The invention further relates to a method for calibrating the above-specified ball joint.

A known example of a ball joint with a plastic shell for use on a vehicle is illustrated in Figure 5 of the attached drawings. With reference to Figure 5, the ball joint is generally indicated 10 and basically comprises a metal pin 12, at an end of which a ball head 14 is formed, usually as a single piece with the pin 12, a metal socket 16 having an open cavity 18 and a plastic shell 20 fitted in the open cavity 18 of the socket 16 and defining a spherical seat 22 in which the ball head 14 engages. A lubricant layer is interposed between the spherical seat 22 and the ball head 14. The plastic shell 20 is held within the cavity 18 of the socket 16 by means of a locking washer 24, which in its turn is secured to the socket 16 by means of a retaining lip 26 obtained by plastically bending an upper edge of the socket 16. The ball joint 10 further comprises a protection guard 28, which is fixed on the one side to the pin 12 and on the other to the socket 16. More specifically, the protection guard 28 engages on the side of the socket 16 with an annular retaining edge 30 of a bush element 32 mounted coaxially to the pin 12. In this case, the locking washer 24 is advantageously formed as a single piece with the bush element 32. Alternatively, a circumferential groove adapted to engage the socket-side portion of the protection guard 28 may be provided on the outer surface of the socket 16 instead of the bush element.

In a ball joint of the above-described type, the dimensional and geometrical machining tolerance chain of the ball head, of the shell and of the socket inevitably originates a friction torque between the spherical mating surfaces of the head and of the shell, which torque is high and above all variable over time. The mere interposition of the lubricant layer between the spherical mating surfaces does not make it possible to avoid this drawback.

It is therefore an object of the present invention to provide a ball joint which makes it possible to take up the whole dimensional and geometrical tolerance chain of the components of the joint in such a manner that the final tolerance of the tribologic pair (ball head and spherical seat of the shell) is much smaller than the aforesaid tolerance chain, which has a friction torque between the spherical mating surfaces of the head and of the shell lower and more constant over time than that of a conventional ball joint, and which ensures a lifetime of the tribologic pair at least twice as long as that of a conventional ball joint, the load conditions remaining the same.

This object is achieved according to the invention by virtue of a ball joint having the characteristics defined in independent Claim 1.

A further object of the present invention is to provide a method for calibrating a ball joint provided with a thermoplastic shell by means of the self-adaptation of the tribologic components of the joint.

This further object is achieved according to the invention by virtue of a method including the steps specified in independent Claim 10.

Preferred embodiments of the ball joint and of the method for calibrating the ball joint according to the invention are indicated in the dependent claims.

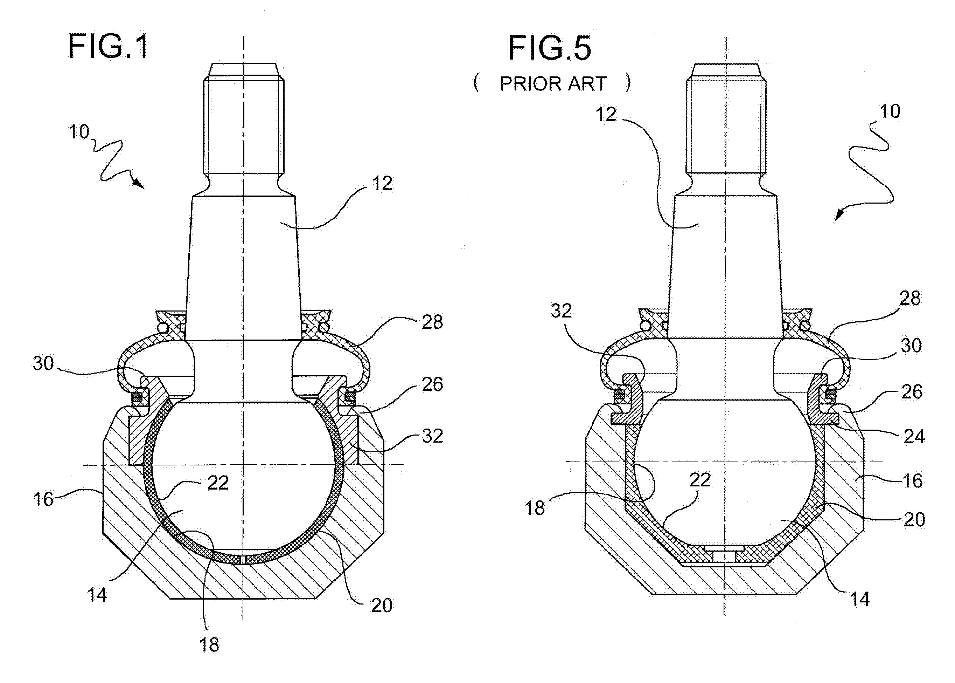

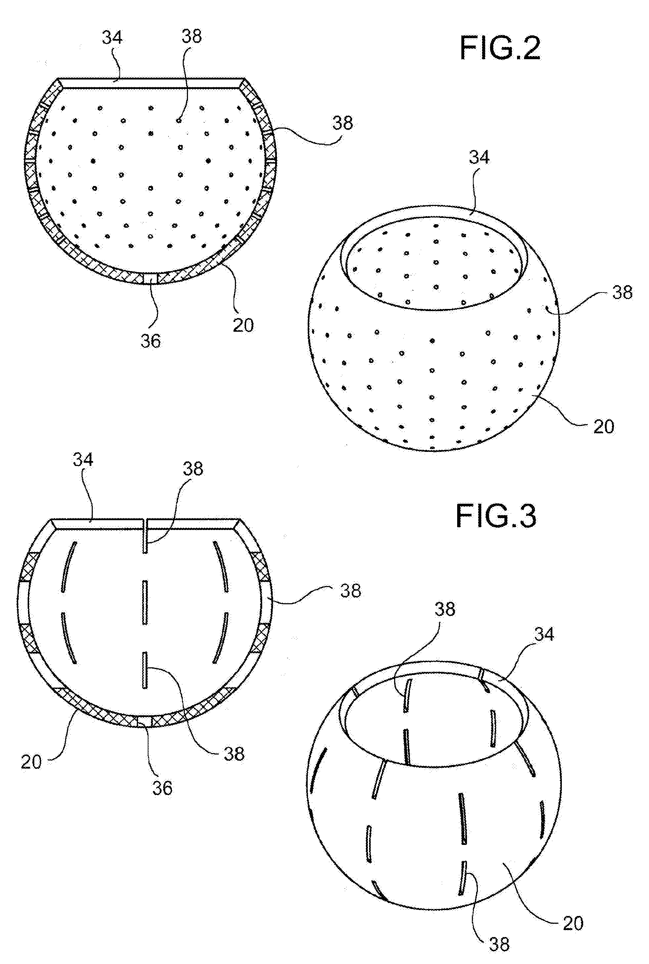

The characteristics and the advantages of the present invention will become apparent from the following detailed description, given purely by way of non-limiting example with reference to the appended drawings, in which:
Figure 1 shows an axial section view of a ball joint according to the invention;
Figure 2 shows a perspective view and an axial section view of the plastic shell of the ball joint of Figure 1, according to a first embodiment;
Figure 3 shows a perspective view and an axial section view of the plastic shell of the ball joint of Figure 1, according to a second embodiment;
Figure 4 shows a schematic axial section view of an apparatus for carrying out the method for calibrating a set of ball joints according to the invention; and
Figure 5 shows an axial section view of a ball joint according to the prior art.
With reference first to Figures 1 and 2, where parts and elements identical or corresponding to those of the ball joint of Figure 5 (prior art) have been given the same reference numerals, a ball joint 10 according to the present invention basically comprises a metal pin 12, at an end of which a head 14 is formed, preferably as a single piece with the pin 12, a metal socket 16 having an open cavity 18 of hemispherical shape and a thermoplastic shell 20 interposed between the head 14 and the socket 16 and having inside it a spherical seat 22 in which the ball head 14 engages. The shell 20 is axially retained in the cavity 18 of the socket 16 by means of a bush element 32, which is mounted coaxially to the pin 12 and is secured in its turn to the socket 16 by means of a retaining lip 26 obtained by plastically bending an upper edge of the socket 16. The ball joint 10 further comprises a protection guard 28, which is secured on the one side to the pin 12 and on the other to the socket 16. More specifically, the protection guard 28 engages on the side of the socket 16 with an annular retaining edge 30 of the bush element 32 projecting from the socket 16.

The shell 20 is made as a hollow element having a constant or variable thickness and a spherical inner shape and is deprived of cap at one of its ends so as to define an opening 34 for insertion of the ball head 14. The shell 20 has a small coaxial hole 36 at its end opposite the opening 34. Moreover, the shell 20 has a plurality of small through apertures 38 distributed all over its surface. In the embodiment of Figure 2, the through apertures 38 are made as circular holes, whereas in the embodiment of Figure 3 the through apertures 38 are made as slits extending along angularly equally-spaced meridian lines. Preferably, the slits located on adjacent meridian lines are vertically offset from each other, so that a solid part on a meridian line corresponds to a slit formed along the adjacent meridian line. Anyway, also other different shapes of the through apertures are naturally possible. It is only important that these apertures are through apertures and are sufficiently distributed over the entire surface of the shell.

The presence of a plurality of through apertures 38 in the shell 20 allows to exploit the known creep phenomenon to obtain an effect of adaptive mating among the tribologic components of the joint, that is to say, among the socket 16, the shell 20 and the ball head, as will be described hereinafter in detailed manner.

The creep phenomenon occurs when a given mechanical pressure is exerted on a thermoplastic component. As a result of the creep, the thickness of the component is reduced after a certain span of time under the action of the mechanical pressure exerted on it. The creep depends on the temperature, on the applied pressure, on the span of time during which the pressure is applied, on the type of thermoplastic material used and on the thickness of the component on which the pressure is applied.

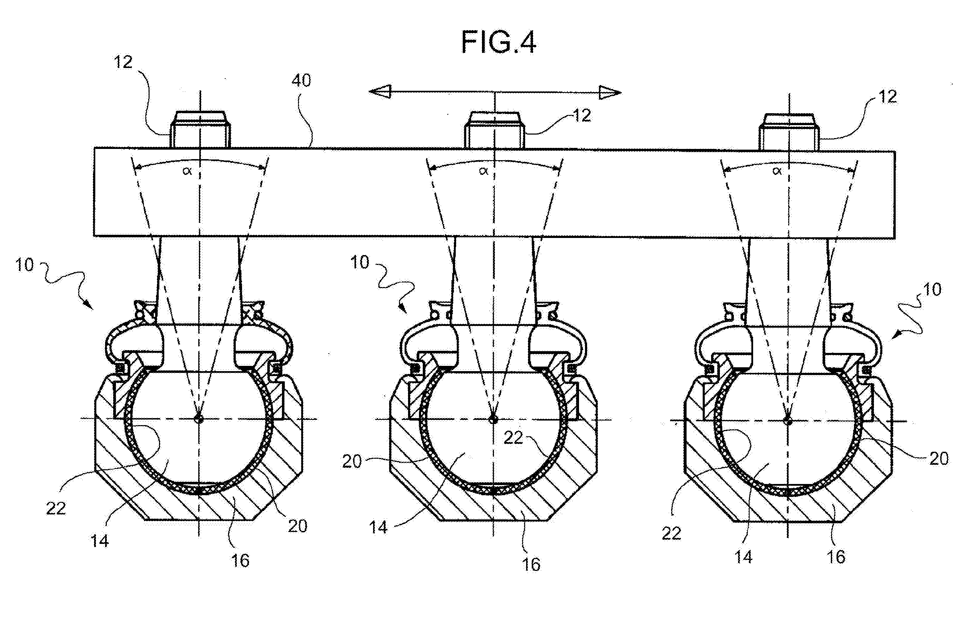

In the ball joint according to the invention, a creep is generated in the shell 20 by subjecting the assembled ball joint 10 to a dynamic thermo-mechanical action of predetermined duration with the use of the apparatus schematically illustrated in Figure 4. The apparatus basically includes a movable plate 40, in which a plurality of seats for the pins 12 of the ball joints 10 are provided. While the sockets 16 of the ball joints are held stationary, the pins 12, and hence the ball heads 14, are caused to gradually swing in a direction and in the other with an increasing inclination to the vertical, up to the maximum inclination possible. The swing range of each pin 12 is indicated α in Figure 4. This swinging movement is carried out for a time ranging from 30 minutes to 3 hours, preferably for 2 hours, at a temperature ranging from 60° to 120°C, preferably 100°C.

Since during this operation the ball joint assumes all the possible operating configurations, it is possible to take up the whole dimensional and geometrical tolerance chain of the tribologic components of the ball joint until the friction torque becomes stable and takes the value required by the particular application.

The through apertures 38 provided in the shell 20 serve to make the process of self-adaptation among the tribologic components of the ball joint easier. They constitute, in fact, empty spaces intended to be partially filled as a result of the creep of the thermoplastic material of the shell 20 caused by the dynamic thermo-mechanical action to which the ball joint 10 is subjected.

The through apertures 38 can also serve as a distributed reservoir of lubricant interposed between the ball head 14 and the inner surface 22 of the shell 20.

Naturally, the principle of the invention remaining unchanged, the embodiments and details of construction may vary widely with respect to those described and illustrated purely by way of a non-limiting example.

For example, the shell 20 may be formed by more separate pieces, rather than by a single piece, as in the preferred embodiment illustrated in the drawings. As far as the thermoplastic material of the shell is concerned, it may be a non-reinforced homopolymer, a non-reinforced copolymer obtained from homopolymers belonging to different families, a homopolymer reinforced with charges of any kind, or furthermore a copolymer reinforced with charges of any kind and obtained from homopolymers belonging to different families.

## Claims

1. Ball joint (10), particularly for use on a vehicle, comprising a ball head (14), a socket (16) having a cavity (18), and a shell of thermoplastic material (20) received in the cavity (18) of the socket (16) and having a spherical inner surface (22) in which the ball head (14) engages;
**characterized in that** the shell (20) has a plurality of through apertures (38) distributed over its entire surface.

2. Ball joint according to Claim 1, wherein the through apertures (38) are circular holes.

3. Ball joint according to Claim 1, wherein the through apertures (38) are slits extending along meridian lines of the spherical surface (22) of the shell (20).

4. Ball joint according to any one of the preceding claims, wherein the shell (20) is formed by a single piece.

5. Ball joint according to any one of Claims 1 to 4, wherein the shell (20) is formed by more separate pieces.

6. Ball joint according to any one of the preceding claims, wherein the shell (20) is made of a non-reinforced homopolymer or copolymer.

7. Ball joint according to any one of Claims 1 to 5, wherein the shell (20) is made of a reinforced homopolymer or copolymer.

8. Ball joint according to any one of the preceding claims, wherein the shell (20) is made as a hollow element of constant thickness.

9. Ball joint according to any one of Claims 1 to 8, wherein the shell (20) is made as a hollow element of variable thickness.

10. Method for calibrating a ball joint (10) including a ball head (14), a socket (16) having a cavity (18) and a shell of thermoplastic material (20) received in the cavity (18) of the socket (16) and having a spherical inner surface (22) in which the ball head (14) engages, wherein shell (20) has a plurality of through apertures (38) distributed over its entire surface, the method comprising the steps of:
a) assembling the ball joint (10);
b) producing a relative swinging movement between the ball head (14) and the socket (16), in given temperature conditions and for a given time, by causing the ball joint (10) to assume all the possible operating configurations, so as to achieve a self-adaptation of the ball joint (10) as a result of the creep produced in the shell (20).

11. Method according to Claim 10, wherein said step b) is carried out for a time ranging from 30 minutes to 3 hours and at a temperature ranging from 60° to 120°C.

12. Method according to Claim 10, wherein said step b) is carried out for about 2 hours at a temperature of about 100°C.

13. Method according to any one of Claims 10 to 12, wherein said step b) is carried out by holding the socket (16) stationary and causing the ball head (14) to swing.

14. Method according to any one of Claims 10 to 13, wherein said step b) is carried out on more ball joints (10) at the same time.
